# EUROPEAN PATENT APPLICATION

(11) **EP 4 207 463 A1**
(43) Date of publication of application: **05.07.2023**
(21) Application number: 22174622.5
(22) Date of filing: 20.05.2022
(51) Int. Cl.: H01M 50/367, H01M 50/204, H01M 50/249, H01M 10/625, H01M 10/6563, B60H 1/00

(54) **BATTERY PACK WITH FUNCTION OF DISCHARGING VENTING GAS, AND CONTROL SYSTEM FOR THE SAME**

(30) Priority: 28.12.2021 KR 20210189765
(71) Applicant: H GREEN POWER Inc., Chungju-si 27465 (KR)
(72) Inventor: KIM, Woo-Hyung, 27465 Chungcheongbuk-do (KR); RYU, Jae-Yeon, 27465 Chungcheongbuk-do (KR); KIM, Jae-Nyeon, 27465 Chungcheongbuk-do (KR); JEONG, Ba-Wi, 27465 Chungcheongbuk-do (KR); SHIN, Min-Cheol, 27465 Chungcheongbuk-do (KR); PARK, Hae-In, 27465 Chungcheongbuk-do (KR)
(74) Representative: Zimmermann, Tankred Klaus

(57) **Abstract**

The disclosure relates to a battery pack with a function of discharging venting gas and a control system for the same, in which air for cooling is allowed to flow during a normal state, and venting gas generated in a battery cell during thermal runaway is discharged outward from a vehicle but prevented from flowing back to a vehicle interior.

The battery pack with a function of discharging venting gas includes an outlet duct including a channel selectively set to discharge air that returns from cooling a battery cell to an interior of a vehicle, or discharge venting gas that is generated due to thermal runaway of the battery cell to an outside of the vehicle; a switching wall provided inside the outlet duct, and setting a channel inside the outlet duct; and an actuator actuating the switching wall to discharge the venting gas to the outside of the vehicle when the thermal runaway occurs in the battery cell.

## Description

### BACKGROUND OF THE INVENTION

### Field of the Invention

The disclosure relates to a battery pack with a function of discharging venting gas and a control system for the same, in which air for cooling is allowed to flow during a normal state, and venting gas generated in a battery cell during thermal runaway is discharged outward from a vehicle but prevented from flowing back to a vehicle interior.

### Description of the Related Art

Recently, an electric vehicle has been widespread by breaking away from the internal combustion engine used as a driving source of a vehicle.

In a hybrid vehicle using both the internal combustion engine and an electric motor as the driving source, or the electric vehicle using only the electric motor as the driving source instead of the internal combustion engine, a battery pack is employed to supply power to the electric motor.

The battery pack generates heat while operating, and is therefore cooled by an air-cooling method or a water-cooling method to maintain an appropriate temperature.

When the air-cooling method is used to cool the battery pack, air for cooling may be supplied from the atmosphere, but air conditioning in the interior of the vehicle is generally supplied to the battery pack so that the battery pack can maintain an appropriate temperature.

In such a battery pack, the air is supplied from the interior of the vehicle to the battery pack. Therefore, venting gas, which is generated when thermal runaway of battery cells occurs inside the battery pack, cannot but flow into the interior of the vehicle.

Accordingly, a problem arises in that the venting gas may be introduced into the vehicle interior before a passenger of the vehicle evacuates the vehicle.

### SUMMARY OF THE INVENTION

The disclosure is to provide a battery pack with a function of discharging venting gas and a control system for the same, in which air from the interior of a vehicle is supplied to the inside of the battery pack during a normal state, and venting gas generated due to thermal runaway is discharged to the outside of the vehicle when the thermal runaway occurs in the battery pack and thus prevented from flowing back to the interior of the vehicle interior.

According to an embodiment of the disclosure, a battery pack with a function of discharging venting gas includes an outlet duct including a channel selectively set to discharge air that returns from cooling a battery cell to an interior of a vehicle, or discharge venting gas that is generated due to thermal runaway of the battery cell to an outside of the vehicle; a switching wall provided inside the outlet duct, and setting a channel inside the outlet duct; and an actuator actuating the switching wall to discharge the venting gas to the outside of the vehicle when the thermal runaway occurs in the battery cell.

The outlet duct may include a first housing; and a second housing coupled to the first housing and internally formed with a channel through which air or the venting gas flows.

The second housing may include a cooling channel communicating with the interior of the vehicle to discharge air that returns from cooling the battery cell to the interior of the vehicle; and a discharging channel communicating with the outside of the vehicle to discharge the venting gas that is generated due to the thermal runaway of the battery cell to the outside of the vehicle, wherein the switching wall selectively opens one of the cooling channel and the discharging channel.

The battery pack further includes a through-hole formed in a portion where the discharging channel is formed penetrating the second housing, wherein the switching wall is provided to open and close the through-hole, and the switching wall closes the through-hole to open the cooling channel and opens the through-hole to open the discharging channel.

The switching wall may include a rotary shaft to be rotatably installed in the second housing, and the actuator may be connected to the rotary shaft and rotates the switching wall.

The battery pack may further include a discharging blower provided in the discharging channel and discharging the venting gas.

The first housing may include a stopper protruding from the first housing and limiting the rotation angle of the switching wall.

The first housing may include a hook protruding from the first housing and preventing the switching wall, which has been rotated to close the cooling channel, from being unintentionally rotated again in the opposite direction.

The hook may be formed in the first housing more upstream than the stopper.

The battery pack may further include an upper case; and a lower case fastened to the upper case and placing the battery cells therein, wherein the outlet duct is provided inside the upper case and the lower case.

The upper case may include an inlet port formed to introduce air from the interior of the vehicle into the battery cell.

The upper case may include a cover installed to close the inlet port when the thermal runaway occurs in the battery cell.

The cover may include a first support and a second support, each of which includes an upper end hinge-connected to the cover and a lower end hinge-connected to the upper case and which are spaced apart from each other.

A top surface of the upper case may be formed with a mounting block to which the lower end of the first support and the lower end of the second support are hinge-connected, and the mounting block may be provided with an actuation member for rotating at least one of the first support and the second support.

The battery pack may further include an airtight member provided on a circumference of the bottom surface of the cover for airtight sealing between the cover and the upper case.

The vehicle may include an electric vehicle that employs an air-cooling method as a battery cooling method.

According to an embodiment of the disclosure, a system for controlling a battery pack with a function of discharging venting gas may include an outlet duct including a channel selectively set to discharge air that returns from cooling a battery cell to an interior of a vehicle, or discharge venting gas that is generated due to thermal runaway of the battery cell to an outside of the vehicle; a switching wall provided inside the outlet duct, and setting a channel inside the outlet duct; an actuator actuating the switching wall to discharge the venting gas to the outside of the vehicle when the thermal runaway occurs in the battery cell; a sensor detecting the thermal runaway of the battery cell; and a controller controlling the actuator to make the switching wall and the outlet duct form a channel for discharging the venting gas when it is identified that the thermal runaway occurs in the battery cell.

The controller has the same meaning as a battery management system, or encompasses the meaning of control for opening and closing a duct or the like connected to the battery.

The outlet duct may include a cooling channel communicating with the interior of the vehicle to discharge air that returns from cooling the battery cell to the interior of the vehicle, and a discharging channel communicating with the outside of the vehicle to discharge the venting gas that is generated due to the thermal runaway of the battery cell to the outside of the vehicle, and the controller may control the actuator to actuate the switching wall to close the cooling channel and open the discharging channel so that the venting gas can be discharged through the discharging channel when it is identified that the thermal runaway occurs in the battery cell.

The outlet duct may be internally formed with a stopper limiting the rotation angle of the switching wall. A hook formed more upstream than the stopper, preventing the switching wall from being rotated in the opposite direction. The controller may control the actuator to rotate the switching wall until the switching wall is stopped by the stopper and the hook when it is identified that the thermal runaway occurs in the battery cell.

The discharging channel may be provided with a discharging blower to discharge the venting gas to the outside of the vehicle.

the controller may control the discharging blower to operate while actuating the actuator when it is identified that the thermal runaway occurs in the battery cell.

The system may further include an upper case and a lower case fastened to a lower portion of the upper case to accommodate a plurality of battery cells therebetween, wherein the upper case includes an inlet port formed to introduce air from the interior of the vehicle into the battery cell inside the upper case, wherein a cover is provided outside the upper case to close the inlet port by the controller.

The system may further include a first support and a second support, each of which includes an upper end hinge-connected to the cover and a lower end hinge-connected to the upper case and which are spaced apart from each other; a mounting block formed on a top surface of the upper case and hinge-connecting with the lower end of the first support and the lower end of the second support; and an actuation member rotating at least one of the first support and the second support, wherein the controller controls the actuation member to close the inlet port with the cover during the thermal runaway.

The battery cell may be provided with a sensor to detect the thermal runaway of the battery cell, and the controller may identify whether the thermal runaway occurs in the battery cell based on an input value received from the sensor.

The sensor may include a temperature sensor to detect the temperature of the battery cell, and the controller may identify that the thermal runaway occurs in the battery cell when the temperature of the battery cell detected by the temperature sensor is higher than a preset reference temperature.

The sensor may include a voltage sensor to detect the voltage of the battery cell, and the controller may identify that the thermal runaway occurs in the battery cell when the voltage of the battery cell detected by the temperature sensor is higher than a preset reference voltage.

The vehicle may include an electric vehicle that employs an air-cooling method as a battery cooling method.

In a battery pack with a function of discharging venting gas according to the disclosure and a system for controlling the same, the air in the interior of a vehicle is supplied to the inside of the battery pack, cools battery cells, and then returns to the interior of the vehicle during a normal state.

When venting gas is generated due to thermal runaway in the battery pack, the venting gas is discharged to the outside of the vehicle by changing a discharging path and using a blower, thereby preventing the venting gas from flowing into the interior of the vehicle.

Further, a channel communicating with the interior of the vehicle is closed in the case of the battery pack during the thermal runaway, thereby preventing the venting gas from flowing into the interior of the vehicle.

### BRIEF DESCRIPTION OF THE DRAWINGS

FIG. 1 is a perspective view of a battery pack with a function of discharging venting gas.
FIG. 2 is a perspective view showing that an upper case is removed from a battery pack with a function of discharging venting gas.
FIG. 3 is a plan view showing an internal structure of a battery pack with a function of discharging venting gas.

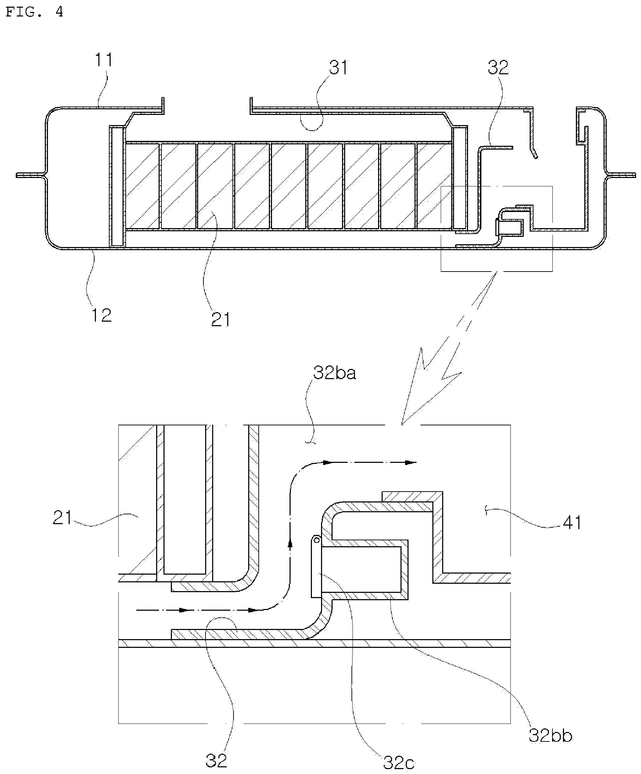

FIG. 4 is a cross-sectional view showing the flow of air in a normal state in a battery pack with a function of discharging venting gas, taken along line I-I of FIG. 1.

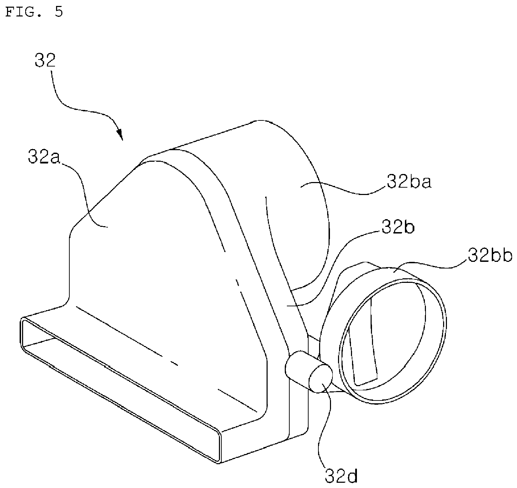

FIG. 5 is a perspective view showing an outlet duct in a battery pack with a function of discharging venting gas.

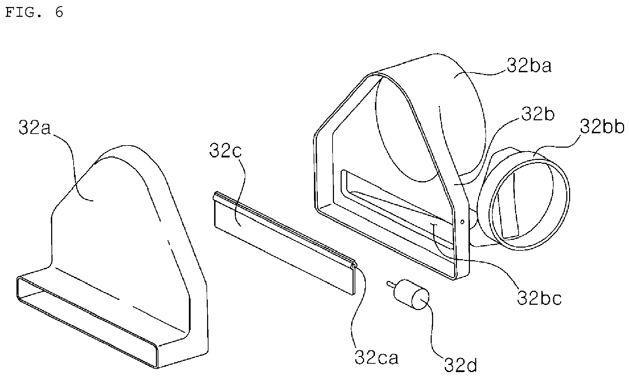

FIG. 6 is an exploded perspective view of an outlet duct in a battery pack with a function of discharging venting gas.

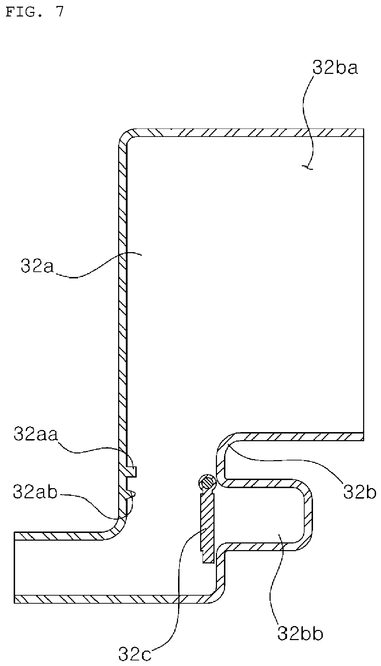

FIG. 7 is a cross-sectional view showing a state of an outlet duct during a normal state in a battery pack with a function of discharging venting gas.

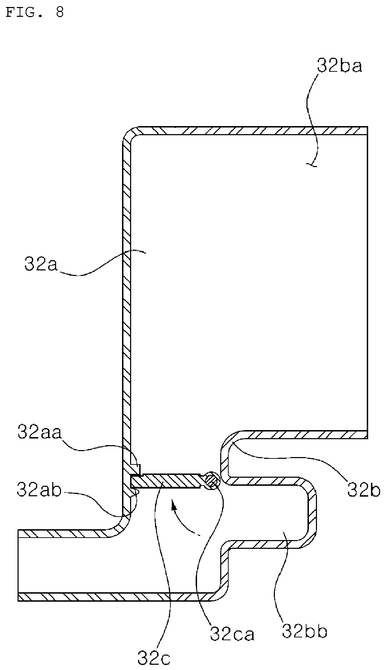

FIG. 8 is a cross-sectional view showing a state of an outlet duct during thermal runaway in a battery pack with a function of discharging venting gas.

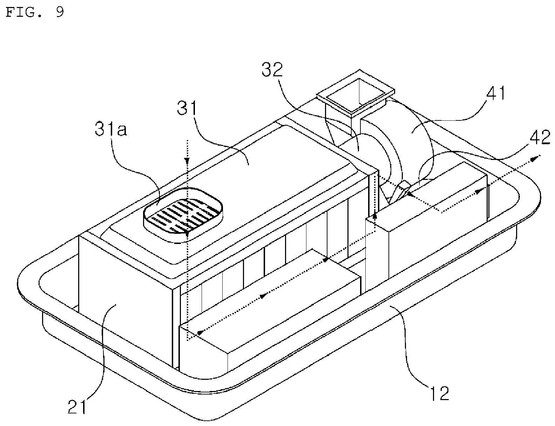

FIG. 9 is a perspective view showing air flow during thermal runaway in a battery pack with a function of discharging venting gas.

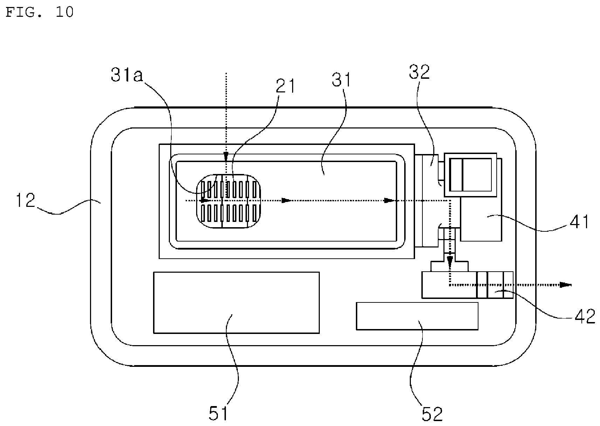

FIG. 10 is a plane view showing flow of air during thermal runaway in a battery pack with a function of discharging venting gas.

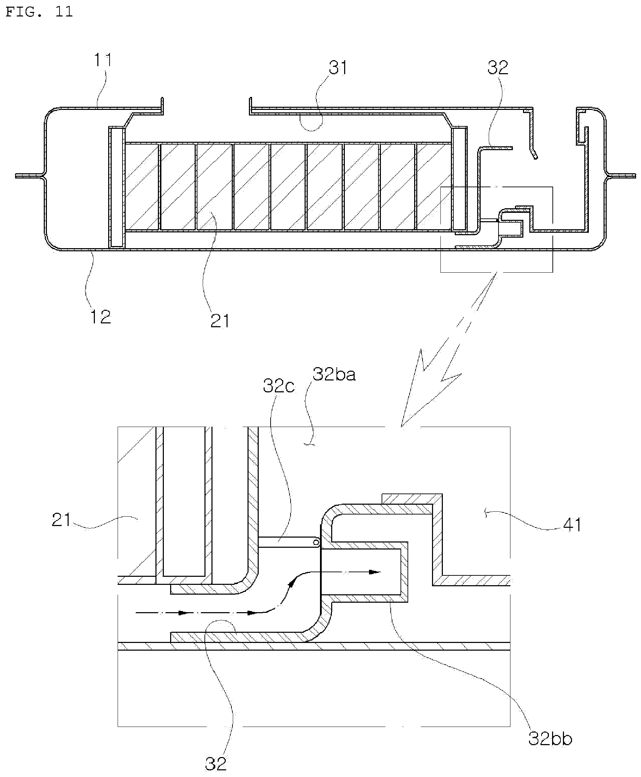

FIG. 11 is a cross-sectional view showing flow of air during thermal runaway in a battery pack with a function of discharging venting gas, taken along line I-I of FIG. 1.
FIG. 12 is a block diagram showing a control system for a battery pack with a function of discharging venting gas.
FIGS. 13 and 14 are a perspective view and a lateral view showing an upper case with a cover in a battery pack with a function of discharging venting gas.
FIGS. 15 and 16 are lateral views showing that an inlet port of an upper case is closed with a cover during thermal runaway in a battery pack with a function of discharging venting gas.

### DETAILED DESCRIPTION OF THE INVENTION

Below, a battery pack with a function of discharging venting gas according to the disclosure and a system for controlling the same will be described in detail with reference to the accompanying drawings.

A battery pack with a function of discharging venting gas according to the disclosure and a system for controlling the same may be applied to a vehicle that cools the battery pack with the indoor air of the vehicle. For example, an electric vehicle, that employs an air-cooling method in cooling a battery receives air from the interior of the vehicle, and it is therefore preferable that the battery pack with the function of discharging venting gas according to the disclosure and the system for controlling the same are applied to an electric vehicle employing the air-cooling method in cooling the battery.

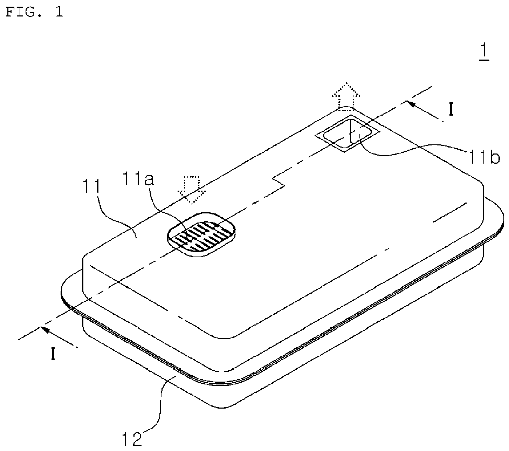

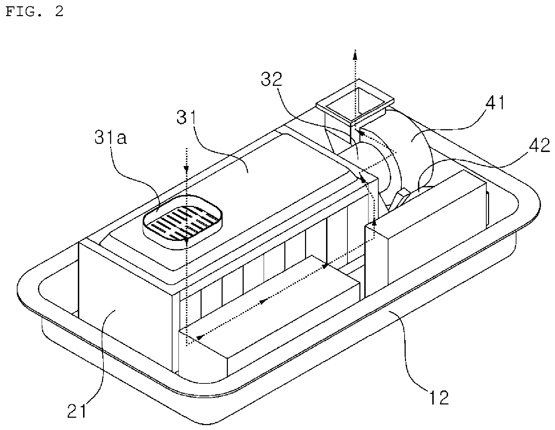

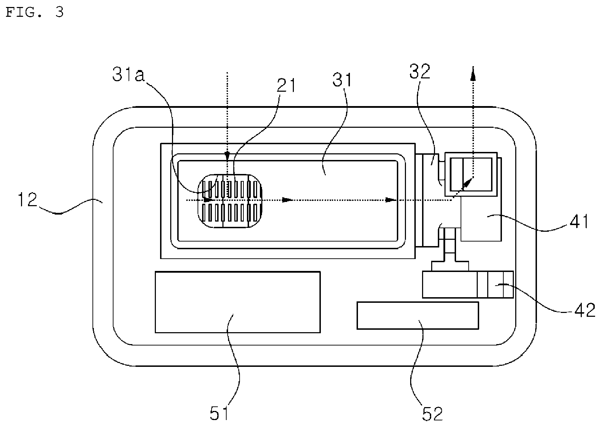

FIGS. 1 to 3 illustrate a battery pack with a function of discharging venting gas according to the disclosure.

A battery pack 1 includes a plurality of battery cells 21 and other elements disposed in a space formed between an upper case 11 and a lower case 12, which are fastened up and down.

The plurality of battery cells 21 are arrayed being stacked, and packaged by the upper case 11 and the lower case 12.

The upper case 11 includes an inlet port 11a formed to introduce air from the interior of the vehicle into the battery cell 21, and an outlet port 11b formed to discharge air returning from cooling the battery cell 21 back to the interior of the vehicle.

During a normal state of the battery cell 21, the air is supplied to the battery cell 21 through the inlet port 11a, cools the battery cell 21, and is discharged to the interior of the vehicle through the outlet port 11b.

Between the upper case 11 and the battery cell 21, an inlet duct 31 is provided to guide air introduced into the inlet duct 31 to be evenly supplied to the plurality of battery cells 21.

Between the upper case 11 and the lower case 12, an outlet duct 32 is provided to discharge fluid inside the battery pack 1 to the outside.

The outlet duct 32 includes a channel selectively set to discharge air that returns from cooling the battery cell 21 to the interior of the vehicle, or discharge venting gas that is generated by thermal runaway of the battery cell 21 to the outside of the vehicle.

The outlet duct 32 includes a first housing 32a and a second housing 32b, and the first housing 32a and the second housing 32b are coupled to form a channel in which air or the venting gas flows.

The outlet duct 32 may be provided as a single body, but preferably divided in two into the first housing 32a and the second housing 32b so as to install a switching wall 32c (to be described later) therebetween.

In detail, the second housing 32b is shaped to have a cooling channel 32ba communicating with the interior of the vehicle so that air returning from cooling the battery cell 21 can be discharged to the interior of the vehicle, and a discharging channel 32bb communicating with the outside of the vehicle so that the venting gas generated by the thermal runaway of the battery cell 21 can be discharged to the outside of the vehicle.

During the normal state, air returning from cooling the battery cell 21 is discharged again to the interior of the vehicle through the cooling channel 32ba, and then circulated. When the venting gas is generated by the thermal runaway of the battery cell 21, the venting gas is discharged to the outside of the vehicle through the discharging channel 32bb.

The cooling channel 32ba and the discharging channel 32bb are respectively provided with a cooling blower 41 for blowing air returning from cooling the battery cell 21 to the interior of the vehicle, and a discharging blower 42 for discharging the venting gas generated due to the thermal runaway of the battery cell 21 to the outside of the vehicle.

The switching wall 32c is provided inside the outlet duct 32, and selectively closes one of the cooling channel 32ba and the discharging channel 32bb so as to open the other one of the cooling channel 32ba and the discharging channel 32bb, thereby setting the channel inside the outlet duct 32.

A through-hole 32bc is formed in a portion where the discharging channel 32bb is formed penetrating the second housing 32b, and the switching wall 32c is installed to open and close the through-hole 32bc. When the switching wall 32c closes the through-hole 32bc, the cooling channel 32ba is opened (during the normal state). When the switching wall 32c opens the through-hole 32bc, the discharging channel 32bb is opened (during the thermal runaway). The switching wall 32c may include a rotary shaft 32ca to be rotatably installed in the second housing 32b.

When the switching wall 32c closes the through-hole 32bc, the discharging channel 32bb is blocked off and the cooling channel 32ba is opened, so that air returning from cooling the battery cell 21 can be discharged to the interior of the vehicle via the cooling channel 32ba and the outlet port 11b.

However, when thermal runaway occurs in the battery cell 21, the switching wall 32c opens the through-hole 32bc, and the discharging channel 32bb is used as a channel through which fluid flows in the outlet duct 32, so that the venting gas generated due to the thermal runaway can be discharged to the outside of the vehicle.

To maintain a rotated state of the switching wall 32c when the switching wall 32c is rotated to discharge the venting gas, a stopper 32aa and a hook 32ab may be formed protruding from one side of the outlet duct 32, for example, one side of the first housing 32a.

The stopper 32aa limits the rotation angle of the switching wall 32c. The stopper 32aa prevents the switching wall 32c from excessively rotating, thereby preventing both the discharging channel 32bb and the cooling channel 32ba from being opened.

The hook 32ab prevents the switching wall 32c, which has been rotated to close the cooling channel 32ba, from being unintentionally rotated again in an opposite direction. To this end, the hook 32ab protrudes from the first housing 32a and has predetermined elasticity. When the switching wall 32c is rotated with a force stronger than the elasticity, the hook 32ab is pressed to allow the switching wall 32c to rotate beyond the hook 32ab.

The hook 32ab is formed in the outlet duct 32 more upstream than the stopper 32aa, and therefore the switching wall 32c rotated to open the discharging channel 32bb first passes the hook 32ab and then stops between the hook 32ab and the stopper 32aa.

An actuator 32d actuates the switching wall 32c to discharge the venting gas generated by the thermal runaway to the outside of the vehicle when the thermal runaway occurs. The actuator 32d is connected to the rotary shaft 32ca of the switching wall 32c and rotates the switching wall 32c.

When the switching wall 32c is rotated to open the discharging channel 32bb and the discharging blower 42 operates, the venting gas generated in the battery cell 21 is discharged to the outside.

Between the upper case 11 and the lower case 12, a power relay assembly 51, a controller 52, etc., may be provided to control the battery pack 1.

In addition to the switching wall 32c and the discharging blower 42 for discharging the venting gas to the outside, it is necessary to actively prevent the venting gas from flowing from the battery cell 21 into the vehicle interior.

To this end, a cover 13 may be provided to close the inlet port 11a of the upper case 11 during the thermal runaway of the battery cell 21. The inlet port 11a is opened during the normal state, but closed by the cover 13 during the thermal runaway.

To open and close the inlet port 11a, the cover 13 is supported by a first support 14 and a second support 15 and is installed in the upper case 11. The first support 14 and the second support 15, each of which includes an upper end hinge-connected to the cover 13 and a lower end hinge-connected to the upper case 11, are positioned being separated. The cover 13, the first support 14, the second support 15, and the upper case 11 form a four-bar linkage mechanism, and therefore the inlet port 11a is opened and closed with the cover 13 by actuating one of the first support 14 and the second support 15.

For the hinge connection between the upper case 11 and each of the first support 14 and the second support 15, the upper case 11 is formed with a mounting block 16.

The mounting block 16 is internally provided with an actuation member 17 for actuating at least one of the first support 14 and the second support 15. The actuation member 17 may be provided as an actuator, a motor, etc. For example, when the motor is used as the actuation member 17, the motor actuates the first support 14 or the second support 15 to open and close the inlet port 11a with the cover 13.

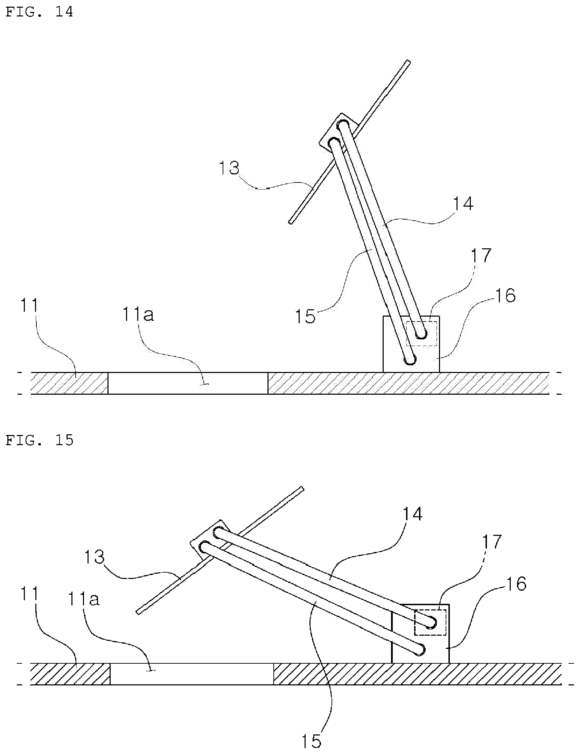

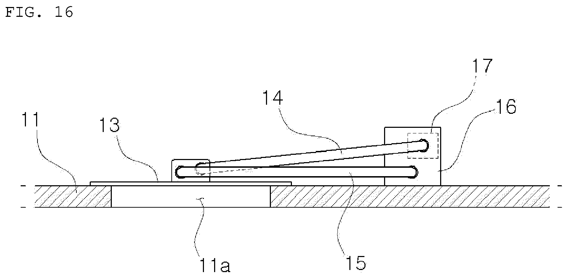

FIGS. 14 to 16 show a process of closing the inlet port 11a with the cover 13. When the thermal runaway is detected and the actuation member 17 operates, the first support 14 is rotated making the cover 13 and the second support 15 rotate together, so that the cover 13 can close the inlet port 11a (see FIG. 16).

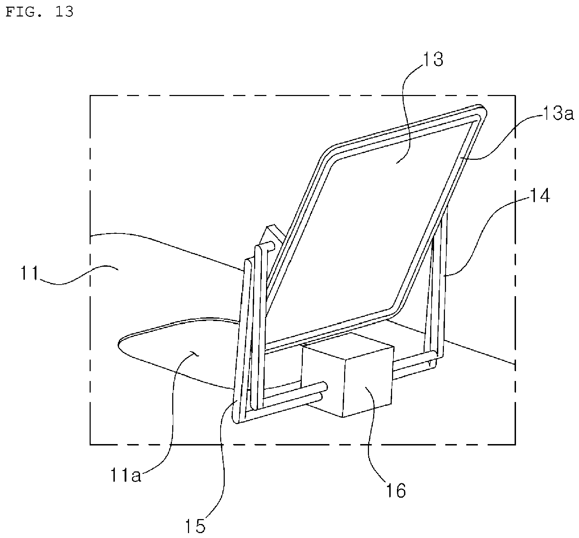

On the circumference of the bottom surface of the cover 13, an airtight member 13a may be provided for airtight sealing between the cover 13 and the upper case 11. For example, as shown in FIG. 13, an O-ring 13a is provided on the bottom surface of the cover 13, and airtightly seals the cover 13 and the upper case 11 when the cover 13 closes the inlet port 11a, thereby preventing the venting gas from leakage. Besides the O-ring 13a, a gasket, heat-resistant foam, etc., may be used as the airtight member.

Meanwhile, the outlet port 11b of the upper case 11 is provided to be connected to the outlet of the cooling channel 32ba, and therefore an element for selectively closing the outlet port 11b is not required because gas does not flow through the outlet port 11b when the switching wall 32c operates to close the cooling channel 32ba.

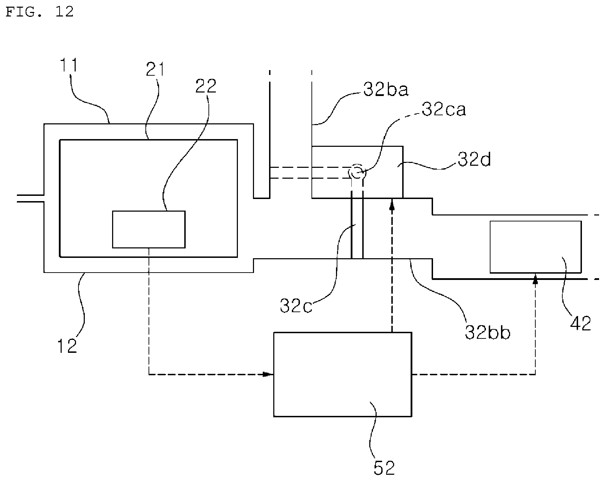

FIG. 12 illustrates a control system for a battery pack with a function of discharging venting gas according to the disclosure.

The control system for a battery pack with a function of discharging venting gas according to the disclosure includes the foregoing battery pack with the function of discharging the venting gas, and controls the operations of the battery pack with the function of discharging the venting gas.

The battery pack 1 is internally provided with a sensor 22 for detecting the state of the battery cell 21. For example, the sensor 22 is provided in each battery cell 21, and detects the state of each battery cell 21.

The sensor 22 may include a temperature sensor for detecting the temperature of the battery cell 21 installed inside the battery pack 1, or a voltage sensor for detecting the voltage of the battery cell 21 installed inside the battery pack 1.

The controller 52 identifies whether the thermal runaway occurs in the battery cell 21 based on data received from the sensor 22, and controls the actuator 32d to operate when it is identified that the thermal runaway occurs in the battery cell 21.

The controller 52 may identify that the thermal runaway occurs in the battery cell 21 when the temperature of the battery cell 21 detected by the sensor 22 is higher than a preset reference temperature, or when the voltage of the battery cell 21 detected by the sensor 22 is higher than a preset reference voltage.

When it is identified that the thermal runaway occurs in the battery cell 21, the controller 52 controls the actuator 32d to operate so that the switching wall 32c and the outlet duct 32 can form a channel for discharging the venting gas. In other words, in the state that the switching wall 32c is closing the discharging channel 32bb, the controller 52 controls the actuator 32d to operate to open the discharging channel 32bb and close the cooling channel 32ba.

The controller 52 controls the actuator 32d to rotate the switching wall 32c until an end portion of the switching wall 32c is stopped by the stopper 32aa and the hook 32ab so that the cooling channel 32ba is completely closed.

Further, the controller 52 controls the discharging blower 42 to blow the venting gas while controlling the actuator 32d.

Like this, when the thermal runaway occurs in the battery cell 21, the venting gas is discharged to the outside by closing the channel communicating with the interior of the vehicle, i.e., the cooling channel 32ba and the inlet port 11a and by opening the discharging channel 32bb communicating with the outside of the vehicle, thereby securing time for passengers to evacuate while preventing the venting gas from flowing into the interior of the vehicle.

Although specific embodiments of the disclosure are illustrated and described, it will be obvious to a person having ordinary knowledge in the art that a variety of improvements and changes can be made in the disclosure without departing from the technical idea of the disclosure defined in the appended claims. Accordingly, the technical protection scope of the disclosure is defined by the technical spirit of the appended claims.

**DESCRIPTION OF REFERENCE NUMERALS**

| | | | |
|---|---|---|---|
| 1: | battery pack | 11: | upper case |
| 11a: | inlet port | 11b: | outlet port |
| 12: | lower case | 13: | cover |
| 13a: | O-ring | 14: | first support |
| 15: | second support | 16: | mounting block |
| 17: | actuation member | 21: | battery module |
| 31: | inlet duct | 32: | outlet duct |
| 32a: | first housing | 32aa: | stopper |
| 32ab: | hook | 32b: | second housing |
| 32ba: | first channel | 32bb: | second channel |
| 32bc: | through-hole | 32c: | switching wall |
| 32ca: | rotary shaft | 32d: | actuator |
| 41: | first blower | 42: | second blower |
| 51: | power relay assembly | 52: | controller |

## Claims

1. A battery pack with a function of discharging venting gas, comprising:
an outlet duct configured to discharge the air that cooled a battery cell to the interior of a vehicle, or selectively set a channel to discharge the venting gas generated due to thermal runaway of the battery cell to the outside of the vehicle;
a switching wall provided inside the outlet duct, and setting a channel inside the outlet duct; and
an actuator actuating the switching wall to discharge the venting gas to the outside of the vehicle when the thermal runaway occurs in the battery cell.

2. The battery pack of claim 1, wherein the outlet duct comprises:
a first housing; and
a second housing coupled to the first housing and internally formed with a channel through which air or the venting gas flows.

3. The battery pack of claim 2, wherein the second housing comprises:
a cooling channel communicating with the interior of the vehicle to discharge air that returns from cooling the battery cell to the interior of the vehicle; and
a discharging channel communicating with the outside of the vehicle to discharge the venting gas that is generated due to the thermal runaway of the battery cell to the outside of the vehicle,
wherein the switching wall selectively opens one of the cooling channel and the discharging channel.

4. The battery pack of claim 3, further comprising a through-hole formed in a portion where the discharging channel is formed penetrating the second housing,
wherein the switching wall is provided to open and close the through-hole, and
the switching wall closes the through-hole to open the cooling channel and opens the through-hole to open the discharging channel.

5. The battery pack of claim 2, wherein
the switching wall comprises a rotary shaft to be rotatably installed in the second housing, and
the actuator is connected to the rotary shaft and rotates the switching wall.

6. The battery pack of claim 3, further comprising a discharging blower provided in the discharging channel and discharging the venting gas.

7. The battery pack of claim 3, wherein the first housing comprises a stopper protruding from the first housing and limiting a rotation angle of the switching wall.

8. The battery pack of claim 7, wherein the first housing comprises a hook protruding from the first housing and preventing the switching wall, which has been rotated to close the cooling channel, from being unintentionally rotated again in the opposite direction.

9. The battery pack of claim 8, wherein the hook is formed in the first housing more upstream than the stopper.

10. The battery pack of claim 1, further comprising:
an upper case; and
a lower case fastened to the upper case and placing the battery cells therein,
wherein the outlet duct is provided inside the upper case and the lower case.

11. The battery pack of claim 10, wherein the upper case comprises an inlet port formed to introduce air from the interior of the vehicle into the battery cell.

12. The battery pack of claim 11, wherein the upper case comprises a cover installed to close the inlet port when the thermal runaway occurs in the battery cell.

13. The battery pack of claim 12, wherein the cover comprises a first support and a second support, each of which comprises an upper end hinge-connected to the cover and a lower end hinge-connected to the upper case and which are spaced apart from each other.

14. The battery pack of claim 13, wherein
a top surface of the upper case is formed with a mounting block to which the lower end of the first support and the lower end of the second support are hinge-connected, and
the mounting block is provided with an actuation member for rotating at least one of the first support and the second support.

15. A system for controlling a battery pack with a function of discharging venting gas, the system comprising:
an outlet duct comprising a channel selectively set to discharge air that returns from cooling a battery cell to an interior of a vehicle, or discharge venting gas that is generated due to thermal runaway of the battery cell to an outside of the vehicle;
a switching wall provided inside the outlet duct, and setting a channel inside the outlet duct;
an actuator actuating the switching wall to discharge the venting gas to the outside of the vehicle when the thermal runaway occurs in the battery cell;
a sensor detecting the thermal runaway of the battery cell; and
a controller controlling the actuator to make the switching wall and the outlet duct form a channel for discharging the venting gas when it is identified that the thermal runaway occurs in the battery cell.

## Amended claims

### Amended claims in accordance with Rule 137(2) EPC.

1. A battery pack (1) mountable to a vehicle with a function of discharging venting gas, comprising:
an outlet duct (32) configured to discharge the air that cooled a battery cell (21) to the interior of the vehicle, or set a channel to discharge the venting gas generated due to thermal runaway of the battery cell (21) to the outside of the vehicle;
a switching wall (32c) provided inside the outlet duct (32), and setting a channel inside the outlet duct (32); and
an actuator (32d) actuating the switching wall (32c) to discharge the venting gas to the outside of the vehicle when the thermal runaway occurs in the battery cell (21),
wherein the outlet duct (32) comprises:
a first housing (32a); and
a second housing (32b) coupled to the first housing (32a) and internally formed with a channel through which air or the venting gas flows,
wherein the second housing (32b) comprises:
a cooling channel (32ba) communicating with the interior of the vehicle to discharge air that returns from cooling the battery cell (21) to the interior of the vehicle; and
a discharging channel (32bb) communicating with the outside of the vehicle to discharge the venting gas that is generated due to the thermal runaway of the battery cell (21) to the outside of the vehicle,
wherein the switching wall (32c) selectively opens one of the cooling channel (32ba) and the discharging channel (32bb),
**characterized in that**
the first housing (32a) comprises a stopper (32aa) protruding from the first housing (32a) and limiting a rotation angle of the switching wall (32c), and
wherein the first housing (32a) comprises a hook (32ab) protruding from the first housing (32a) and preventing the switching wall (32c), which has been rotated to close the cooling channel (32ba), from being unintentionally rotated again in the opposite direction.

2. The battery pack (1) of claim 1, further comprising a through-hole (32bc) formed in a portion where the discharging channel (32bb) is formed penetrating the second housing (32b),
wherein the switching wall (32c) is provided to open and close the through-hole (32bc), and
the switching wall (32c) closes the through-hole (32bc) to open the cooling channel (32ba) and opens the through-hole (32bc) to open the discharging channel (32bb).

3. The battery pack (1) of claim 1, wherein
the switching wall (32c) comprises a rotary shaft (32ca) to be rotatably installed in the second housing (32b), and
the actuator (32d) is connected to the rotary shaft (32ca) and rotates the switching wall (32c).

4. The battery pack (1) of claim 1, further comprising a discharging blower (42) provided in the discharging channel (32bb) and discharging the venting gas.

5. The battery pack (1) of claim 1, wherein the hook (32ab) is formed in the first housing (32a) more upstream than the stopper (32aa).

6. The battery pack (1) of claim 1, further comprising:
an upper case (11); and
a lower case (12) fastened to the upper case (11) and placing the battery cells (21) therein,
wherein the outlet duct (32) is provided inside the upper case (11) and the lower case (12).

7. The battery pack (1) of claim 6, wherein the upper case (11) comprises an inlet port (11a) formed to introduce air from the interior of the vehicle into the battery cell (21).

8. The battery pack (1) of claim 7, wherein the upper case (11) comprises a cover (13) installed to close the inlet port (11a) when the thermal runaway occurs in the battery cell (21).

9. The battery pack (1) of claim 8, wherein the cover (13) comprises a first support (14) and a second support (15), each of which comprises an upper end hinge-connected to the cover (13) and a lower end hinge-connected to the upper case (11) and which are spaced apart from each other.

10. The battery pack (1) of claim 9, wherein
a top surface of the upper case (11) is formed with a mounting block (16) to which the lower end of the first support (14) and the lower end of the second support (15) are hinge-connected, and
the mounting block (16) is provided with an actuation member (17) for rotating at least one of the first support (14) and the second support (15).
